# DEMANDE DE BREVET EUROPEEN

(11) **EP 1 013 622 A1**
(43) Date de publication de la demande: **28.06.2000**
(21) Numéro de dépôt: 99403175.5
(22) Date de dépôt: 16.12.1999
(51) Int. Cl.: C03C 17/36, C03C 17/22, C03C 17/34, C03C 17/23

(54) **Substrat transparent comportant un revêtement antireflet**

(30) Priorité: 21.12.1998 FR 9816118
(71) Demandeur: SAINT-GOBAIN VITRAGE, 92400 Courbevoie (FR)
(72) Inventeur: Joret, Laurent, 75015 Paris (FR); Lebellac, David, 92400 Courbevoie (FR); Maurer, Marc, 4800 Verviers (BE)
(74) Mandataire: Renous Chan, Véronique

(57) **Abrégé**

La présente invention est relative à un substrat transparent, notamment en verre, muni sur au moins une de ses faces d'un revêtement antireflet A.

Selon l'invention, le revêtement antireflet consiste en une seule couche mince constituée à partir d'au moins deux matériaux d'indice de réfraction différent et dont la composition varie de manière continue dans son épaisseur e.

## Description

L'invention concerne un substrat transparent, notamment en verre, destiné à être incorporé dans un vitrage et muni, sur au moins une de ses faces, d'un revêtement antireflet.

Un revêtement antireflet est usuellement constitué d'un empilement de couches minces interférentielles, en général une alternance de couches à base de matériau diélectrique à forts et faibles indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc son ratio lumière transmise/lumière réfléchie augmenter, ce qui améliore la visibilité des objets placés derrière lui. Lorsqu'on cherche à atteindre un effet antireflet maximal, il est alors préférable de munir les deux faces du substrat de ce type de revêtement.

Une application intéressante est l'équipement de bâtiment. Le vitrage à effet antireflet est, selon cette application, utilisé par exemple en tant que vitrine de magasin, afin de mieux distinguer ce qui se trouve derrière la vitrine même dans les configurations où l'éclairage intérieur est faible par rapport à celui extérieur. Il peut être également utilisé en tant que verre de comptoir.

Depuis peu, une autre application a été envisagée à la demande, notamment, des constructeurs de véhicules automobiles. Il s'agit de conférer à un pare-brise un effet antireflet et ce dans le respect des mesures en vigueur qui imposent des niveaux élevés de transmission lumineuse, en général supérieurs à 75 % et un flou résiduel très faible (inférieur à 1 % de la lumière transmise). L'effet antireflet recherché peut, par exemple, consister en une augmentation de la transmission lumineuse T_{L}, ce qui revient à améliorer le confort visuel du conducteur et de ses passagers. Cela conduit également à diminuer les réflexions parasites qui peuvent gêner le conducteur, en particulier la réflexion de l'équipement intérieur du véhicule.

Jusqu'à ce jour, cette application n'est pas très développée de par le fait que le niveau de durabilité mécanique et chimique requis est difficilement atteint.

En effet, le revêtement antireflet se trouve disposé dans le pare-brise au moins en face 1, c'est-à-dire la face du pare-brise tournée vers l'extérieur de l'habitacle.

Or, cette face du pare-brise est soumise à nombre de sollicitations. Ainsi, le va-et-vient des essuie-glaces en état de marche induit une abrasion importante, les projections diverses de poussières ou gravillons attaquent par endroits le revêtement, tant d'un point de vue mécanique que chimique (corrosion).

Pour résoudre ces problèmes et donc mettre au point un vitrage à revêtement antireflet à durabilité mécanique et chimique suffisantes, en vue d'être utilisé en tant que pare-brise, la Demanderesse a déjà proposé selon le document WO 97/43224 qu'au moins une partie des couches faisant partie de l'empilement antireflet de couches de matériaux d'indices de réfraction alternativement forts et faibles soient des couches pyrolysées.

Cet empilement n'est pas pleinement satisfaisant. En effet, du fait même qu'il subsiste un grand nombre d'interfaces, tout risque de fragilité de l'empilement n'est pas écarté.

Le but de l'invention est alors de proposer un revêtement antireflet aux performances mécaniques améliorées, notamment en vue d'utiliser le vitrage qui en est muni en tant que pare-brise de véhicule automobile.

Pour ce faire, l'invention a pour objet un substrat transparent, notamment en verre, muni, sur au moins une de ses faces, d'un revêtement antireflet A caractérisé en ce que ledit revêtement consiste en une seule couche mince constituée à partir d'au moins deux matériaux d'indice de réfraction différent et dont la composition varie de manière continue dans son épaisseur. De préférence, la couche mince précédemment définie a une épaisseur géométrique comprise entre 100 et 400 nm.

Avantageusement, ctte couche présente au moins une première zone dans son épaisseur (celle la plus proche du substrat) où l'indice de réfraction croît, et au moins une seconde zone (notamment celle la plus proche de l'atmosphère) uù l'indice de réfraction décroît. Entre ces deux zones, il peut aussi y avoir une zone intermédiaire d'indice de réfraction relativement stationnaire. On peut ainsi avoir une première zone où l'indice varie de la valeur I(0) d'environ 1,45 à 1,65 à la valeur I(1) d'au moins 2, notamment de 2,1 à 2,4, puis une seconde zone optionnelle très peu épaisse par rapport à la première où l'indice se maintient sensiblement à la valeur I(2), puis une dernière zone où l'indice décroît à nouveau vers une valeur I(3) qui peut être proche de I(1) ou lui être un peu inférieure. La particularité de cette couche est que l'indice se modifie progressivement, que l'on a bien affaire à une monocouche. Des variations d'indice plus complexes sont également possibles (plus de deux alternances de zone d'indice croissant et de zone d'indice décroissant).

Du fait même de sa constitution, le revêtement antireflet selon l'invention rend le vitrage parfaitement adapté à une utilisation en tant que pare-brise automobile.

En effet, d'une part, la tenue mécanique de la couche continue permet de subir sans aucune difficulté l'opération de bombage.

D'autre part, le revêtement antireflet selon l'invention a un effet de filtration des ultraviolets très efficace, en particulier dans la gamme des longueurs d'onde comprises entre 400 et 500 nanomètres. Cet effet vient se combiner avantageusement à celui de la matière thermoplastique, telle que le PVB, utilisé en tant qu'intercalaire du vitrage feuilleté.

On évite ainsi encore plus efficacement le risque de fanage des matières plastiques et des peintures présentes à l'intérieur de l'habitacle du véhicule automobile.

Avantageusement, la couche est constituée uniquement à partir de deux matériaux d'indice de réfraction différent.

Selon cette variante, la couche mince est de préférence à base de SiOₓN_{y} avec x et y variant de manière continue dans son épaisseur, respectivement entre 0 et 2 et entre 0 et 1,33.

Toujours selon cette variante, il est préférable encore que dans la zone de la couche située à proximité de l'interface avec le milieu ambiant tel que l'air, x varie de manière croissante strictement entre 0 et 2 et y varie de manière décroissante strictement entre 1,33 et 0.

Selon une autre variante, la couche mince selon l'invention est à base de Si_{z}Ti_{1-z}O₂ avec z variant de manière continue dans son épaisseur strictement entre 0 et 1.

De préférence, dans la zone de la couche située à proximité de l'interface avec le milieu ambiant, z varie de manière décroissante strictement entre 0 et 1.

Pour optimiser l'effet antireflet de la « monocouche » à gradient selon l'invention, l'indice de réfraction de la couche mince est, de préférence, compris entre 1,35 et 1,75, avantageusement entre 1,38 et 1,70 dans la zone située à une distance comprise entre 0 et 10 nanomètres de l'interface avec le milieu ambiant tel que l'air.

Les caractéristiques précédemment définies permettent pour le vitrage qui est muni du substrat selon l'invention, de répondre parfaitement aux exigences requises pour l'application pare-brise, à savoir conjointement une valeur de R_{L} inférieure à 7 et même inférieure à 6 % à incidence normale, inférieure à 10 % à incidence de 60°, une valeur de T_{L} à incidence normale d'au moins 75 %.

Il est également possible, selon l'invention, de choisir l'un des matériaux rentrant dans la constitution de la « monocouche » à gradient de manière à ce que celle-ci présente une fonction hydrophobe du côté extérieur du substrat.

Le substrat selon l'invention est avantageusement muni sur la face dépourvue du revêtement antireflet d'un empilement de couches minces comportant au moins une couche fonctionnelle, par exemple métallique du type argent.

Comme type d'empilement, il peut s'agir d'un empilement avec la séquence suivante :
diélectrique/argent/diélectrique ou
diélectrique/argent/diélectrique/argent/diélectrique

On pourra se reporter, pour plus de précisions sur ces types d'empilements, aux demandes de brevets européens EP-A-0 678 484, EP-A-0 645 352 et EP-A-0 635 528.

On peut également utiliser des empilements comprenant une couche réfléchissante et/ou filtrante telle qu'une couche de nitrure, comme du nitrure de titane, comme cela est décrit dans les demandes EP-A-0 638 527 et EP-A-0 650 938.

L'épaisseur de la couche fonctionnelle métallique peut être comprise entre 20 et 25 nanomètres de manière à lui conférer des propriétés anti-solaires.

La séquence préférée de l'empilement est la suivante :
verre/Si₃N₄/ZnO/Ag/Ti/ZnO/Si₃N₄/ZnO/Ag/Ti/ZnO/Si₃N₄

Une variante peut consister à déposer directement ce type d'empilement sur un substrat transparent souple tel que du polyéthylènetérephtalate (PET). Il peut s'agir du produit XiR 70® commercialisé par la société SOUTHWALL.

On peut aussi déposer sur la face du vitrage dépourvue de la couche de l'invention une couche anti-salissures photocatalytique à base de TiO2, comme décrit dans les brevets WO 97/10185 et WO 97/10186.

L'invention concerne également un vitrage feuilleté qui comporte au moins un substrat tel que celui précédemment défini.

Un tel vitrage peut comporter deux substrats transparents, notamment en verre, assemblés par un intercalaire thermoplastique comportant au moins une feuille de polyvinylbutyral (PVB), le substrat transparent dépourvu du revêtement antireflet A comportant lui aussi, sur au moins une de ses faces, un revêtement antireflet A', de préférence selon une technique de pulvérisation à magnétron.

Ce revêtement A' a, de préférence, la séquence suivante :
verre/SnO₂/SiO₂:Al/Nb₂O₅/SiO₂:Al

Le diélectrique Nb₂O₅ peut avantageusement être partiellement ou entièrement remplacé par un matériau à propriétés optiques analogues, tel que du TiO₂, et ce, dans le but de faciliter le dépôt de la dernière couche de l'empilement.

Avantageusement, le revêtement antireflet A est en face 1 et le revêtement antireflet A' est en face 4.

Un tel vitrage feuilleté est parfaitement adapté à une utilisation en tant que pare-brise de véhicule automobile. Il est également adapté à une utilisation en tant que verre de protection d'images de photographies ou de peintures.

On peut noter, par ailleurs, que le revêtement antireflet selon l'invention peut aussi s'appliquer aux vitrages feuilletés dits asymétriques, comportant au moins un substrat verrier et au moins une feuille de polymère à propriétés d'absorption d'énergie comme le polyuréthane.

Le choix de la nature du ou des substrat(s) verrier(s) constitutif(s) du vitrage peut aussi s'avérer important : on peut combiner les propriétés optiques et/ou thermiques intrinsèque(s) au(x) substrat(s) verrier(s) avec les propriétés optiques du ou des revêtement(s) antireflet pour obtenir un vitrage présentant globalement les performances voulues.

Ainsi, les substrats peuvent être choisis en verre clair, par exemple comme ceux vendus sous l'appellation commerciale « Planilux» par la Société SAINT-GOBAIN GLASS. L'effet additionnel d'augmentation de la transmission lumineuse dû au(x) revêtement(s) antireflet permet alors d'obtenir des vitrages extrêmement transparents.

Mais on peut également choisir les substrats constituant les vitrages, en verre présentant des propriétés de transmission énergétique réduite, notamment des verres teintés dans la masse. Au prix d'une certaine baisse de la transmission lumineuse, on obtient des vitrages de protection solaire intéressants, l'effet d'augmentation de la transmission lumineuse obtenu grâce au(x) revêtement(s) antireflet permettant avantageusement d'atténuer cette baisse de niveau de transparence. Des vitrages teintés dans la masse, notamment adaptés aux pare-brise, sont par exemple commercialisés sous l'appellation « Sekurisol » ou « Thermocontrol » par la société SEKURIT SAINT-GOBAIN. D'autres types de verre à transmission énergétique réduite sont également intéressants dans le cadre de la présente invention.

Il s'agit, notamment, de verres de couleur bronze, comme décrits dans les brevets US 4190 542 et US 4 101 705, ou de verres dont la composition a été ajustée plutôt en vue d'une application vitrage automobile. Il s'agit, par exemple, de verres appelés TSA⁺ ou TSA⁺⁺, dont les taux en oxydes colorants du type Fe₂O₃, FeO et CoO sont ajustés afin d'avoir une sélectivité définie par le rapport T_{L}/T_{E} d'au moins 1,30 ou même 1,40 à 1,50 et une teinte dans les verts. On se reportera avantageusement pour plus de précisions à la demande de brevet européen EP-A-0 616 883. On rappelle sommairement ci-dessous le taux des oxydes colorants précités dans les compositions de verre selon l'enseignement de ce brevet (proportions pondérales).

Selon une première série :

| | |
|---|---|
| Fe₂O₃ | 0,55 à 0,62 % |
| FeO | 0,11 à 0,16 % |
| CoO | 0 à 12 ppm, notamment < 12 ppm avec notamment le rapport Fe²⁺/Fe de l'ordre de 0,19 à 0,25. |

Selon une seconde série :

| | |
|---|---|
| Fe₂O₃ | 0,75 à 0,90 % |
| FeO | 0,15 à 0,22 % |
| CoO | 0 à 17 ppm, notamment < 10 ppm avec notamment le rapport Fe²⁺/Fe de l'ordre de 0,20. |

Il peut également s'agir de verres teintés dans la masse, notamment dans les bleu-vert tels que ceux décrits dans les demandes de brevets EP-A-0 644 164, WO 95/00828 ou WO 96/00394.

Tous ces types de compositions de verre teinté peuvent donc être avantageusement choisis de manière à ce que les vitrages présentent des valeurs de transmission énergétique comprise entre 30 et 70 %, notamment entre 35 et 60 % et des valeurs de transmission lumineuse comprise entre 50 et 85 %.

L'invention concerne enfin un procédé de fabrication d'un substrat transparent, notamment en verre, muni sur au moins une de ses faces d'un revêtement antireflet A comportant au moins une couche mince d'épaisseur e déposée selon une technique de CVD plasma à radiofréquence ou micro-ondes à partir d'au moins deux précurseurs pendant une durée t. Selon l'invention, on fait varier, de manière continue, pendant la durée t, au moins un paramètre de dépôt.

Par « paramètre de dépôt » on entend, dans le cadre de l'invention, l'une des conditions de dépôt suivante utilisée selon la technique CVD plasma: pression de dépôt, puissance de rayonnement, débits des précurseurs, température du substrat, tension électrique sur le substrat.

Selon une caractéristique très avantageuse, le paramètre de dépôt que l'on fait varier pendant la durée t est le débit d'au moins un des deux précurseurs.

Selon une autre variante de l'invention, le revêtement antireflet de l'invention A peut aussi être déposé par une autre technique sous vide. Il s'agit de préférence de la pulvérisation cathodique, notamment assistée par un champ magnétique. Comme il s'agit d'oxydes, on peut choisir une pulvérisation réactive, avec un agent oxydant dans l'atmosphère de dépôt. On peut aussi déposer le revêtement par CVD non assistée par un plasma, comme cela est décrit par exemple dans le brevet français FR 95/08421 du 12 juillet 1995.

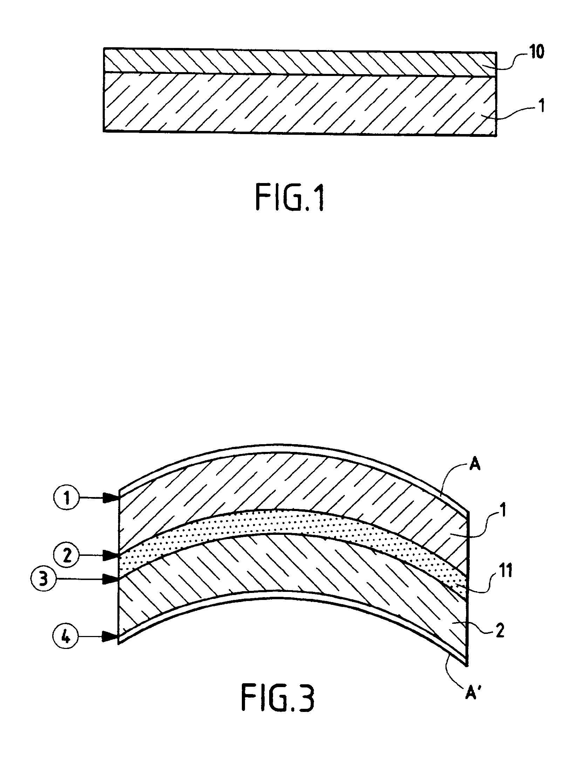

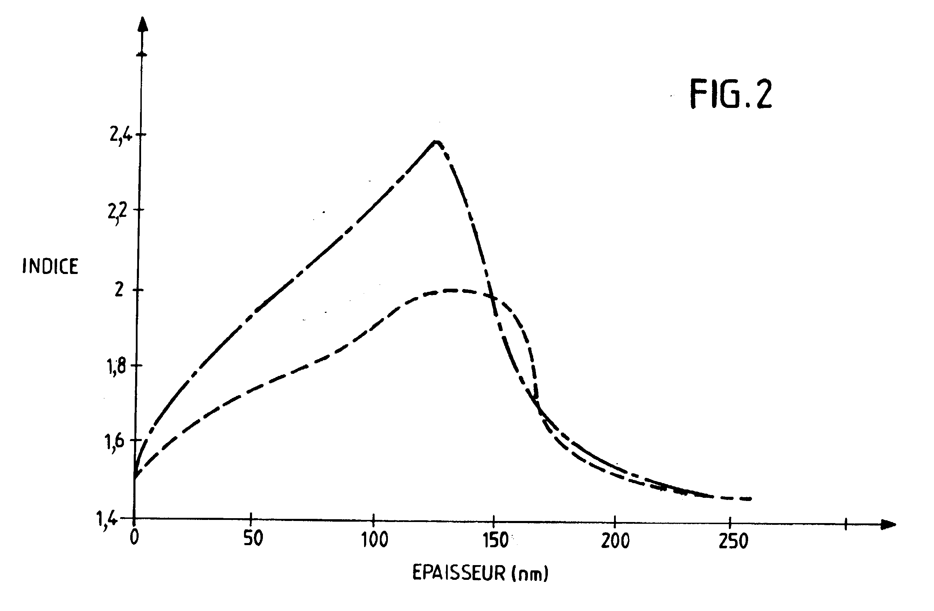

D'autres détails et caractéristiques avantageuses ressortiront ci-après à la lecture de la description détaillée des exemples suivants, non limitatifs, faite en référence aux figures 1 à 3 qui représentent respectivement :
■ figure 1 : un substrat verrier muni, sur une de ses faces, d'un revêtement antireflet conforme à l'invention,
■ figure 2 : deux courbes représentatives du gradient d'indice de réfraction de la couche selon l'invention,
■ figure 3: un vitrage feuilleté comprenant deux revêtements antireflet et un empilement comprenant une couche bas-émissive.

### EXEMPLE 1

La figure 1 représente un substrat verrier de type « Planilux » qui est muni, sur une de ses faces, d'une couche 10 à base de SiOₓN_{y} d'environ 250 nm d'épaisseur, x et y variant de manière continue dans l'épaisseur. Cette variation conduit au profil représenté par la courbe en pointillés de la figure 2.

Pour obtenir cette couche à gradient, on a utilisé la technique de CVD plasma radiofréquence à 13,56 MHz, tel que décrit ci-après.

Dans une enceinte où le vide a été réalisé, on a introduit de l'argon en laissant la pression s'établir à environ 26,7 Pa. La puissance de rayonnement est de 100 Watts.

L'enceinte utilisée, non représentée, comporte quatre orifices reliés chacun à une canalisation. Par l'intermédiaire de chacune de ces canalisations, un gaz plasmagène ou un gaz organo-silicié est susceptible d'être introduit.

Pour réaliser le dépôt conforme à l'invention, on a fait varier de manière continue au cours du temps le débit d'un des composants du gaz plasmagène tel que décrit maintenant.

On précise que les débits sont donnés dans les conditions normales de température et de pression.

A l'instant t = 0, on a introduit: un débit de silane SiH₄ de 30 cm³/min, un débit de protoxyde d'azote N₂O de 100 cm³/min et un débit d'argon de 50 cm³/min.

Au cours du temps nécessaire au dépôt de la première moitié de l'épaisseur de la couche, on a fait varier, de manière continue, le débit du protoxyde d'azote N₂O de 100 à 0 cm³/min et, simultanément, celui de l'ammoniac NH₃ de 0 à 90 cm³/min, les débits de silane et d'argon de restant inchangés et égaux aux débits initiaux.

Au cours du temps nécessaire au dépôt de l'autre moitié de l'épaisseur de la couche, on a fait varier, de manière continue et inverse, le débit du protoxyde d'azote N₂O de 0 à 100 cm³/min et, simultanément, celui de l'ammoniac NH₃ de 90 à 0 cm³/min, les débits de silane et d'argon restant inchangés.

Les courbes de la figure 2 représentent chacune la variation d'indice de réfraction dans l'épaisseur d'une couche conforme à l'invention, variation optimisée par une réflexion lumineuse minimale à 0° d'incidence.

La courbe en traits pointillés est relative à la couche obtenue à partir des mélanges précités ; celle en traits discontinus est relative à une couche obtenue de manière analogue à ce qui précède mais à partir d'un deuxième mélange différent. Ce mélange comportait du Ti(OC₃H₇)₄ en tant que précurseur organométallique de titane et de l'oxygène O₂.

Le profil de ces courbes parfaitement continu révèle l'absence d'interfaces, sources de fragilité.

Pour appréhender la durabilité mécanique de la couche conforme à l'invention, on a fait subir au substrat verrier de la figure 1 deux tests de résistance à l'abrasion.

Le premier test (A) dit test Taber a été effectué à l'aide d'une meule faite à partir d'une poudre abrasive noyée dans un élastomère, élaborée par une machine fabriquée par la société TABER Instrument Corp. (machine référencée sous le modèle 174 « Standard Abrasion Tester »). La meule est de type CS 10F et utilisée sous une charge de 500 grammes, un cycle étant une rotation complète de la meule sur elle-même.

Le deuxième test (B) est effectué en soumettant le substrat à un balayage d'essuie-glace. La force appliquée par le balai sur le substrat est d'environ 45 N, la cadence du balai est de 111 cycles/min, un cycle étant un mouvement d'aller et retour du balai. La dureté du balai est de l'ordre de 70 Shore A.

### EXEMPLE 2 COMPARATIF

A titre d'exemple comparatif, on a réalisé à l'aide d'une technique de dépôt par sputtering un empilement du type : verre/SiON/Si₃N₄/SiO₂, dans lequel les épaisseurs de couches ont été ajustées de manière à obtenir des valeurs spectrophotométriques très proches de celles obtenues grâce au substrat verrier conforme à l'invention, c'est-à-dire, entre autres, avec une valeur de réflexion lumineuse R_{L} inférieure à 5 %.

On a alors fait subir à cet empilement les mêmes tests de résistance à l'abrasion que ceux décrits précédemment.

Le tableau 1 ci-dessous indique les observations visuelles qui ont été faites, au bout d'un certain nombre de cycles, sur les substrats ayant subi les deux tests (A) et (B) considérés plus haut.

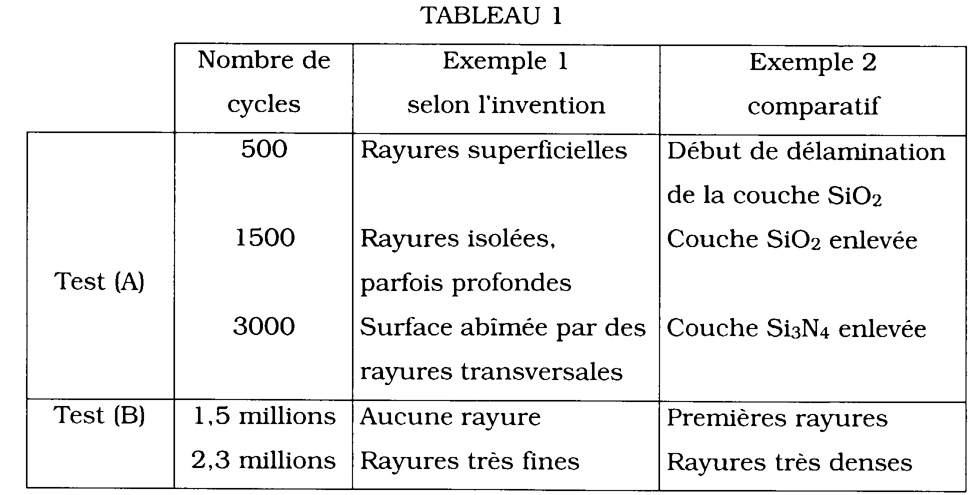

De ce tableau, il ressort clairement que la couche conforme à l'invention présente une durabilité mécanique bien supérieure à l'empilement réalisé selon l'exemple comparatif.

Les exemples 3 et 4 utilisent deux substrats verriers 1, 2 clairs de type Planilux, respectivement de 2,6 et 2,1 mm d'épaisseur, assemblés par une feuille de PVB 11 de 0,76mm d'épaisseur. Les exemples visent particulièrement une application de pare-brise feuilleté pour véhicule automobile. Dans cette application, les deux substrats 1, 2 sont d'abord munis de leur(s) empilement(s) puis bombés, le substrat 1 ayant sa face extérieure 1 convexe et le substrat 2 ayant sa face extérieure 4 concave, tel qu'il est représenté à la figure 3.

### EXEMPLE 3 SELON L'INVENTION

Le substrat 1 est revêtu, sur sa face extérieure 1, de la couche 10 selon l'invention.

Le substrat 1 est revêtu, sur sa face intérieure 2, d'un empilement anti-solaire conforme à celui décrit dans la demande de brevet EP-A-0 718 250 dont la séquence est la suivante :
verre/Si₃N₄/ZnO/Ag/Ti/ZnO/Si₃N₄/ZnO/Ag/Ti/ZnO/Si₃N₄

Les épaisseurs de couches correspondantes sont indiquées dans le tableau 2 ci-dessous, en nanomètres :

**TABLEAU 2**

| | |
|---|---|
| Si₃N₄ | 17 |
| ZnO | 17 |
| Ag | 9 |
| Ti | 1 |
| ZnO | 10 |
| Si₃N₄ | 50 |
| ZnO | 25 |
| Ag | 9 |
| Ti | 1 |
| ZnO | 10 |
| Si₃N₄ | 25 |

Le substrat 2 est, en outre, revêtu sur sa face extérieure 4 d'un empilement antireflet déposé selon une technique de pulvérisation à magnétron, tel que celui décrit dans la demande de brevet EP-A-0 728 712 dont la séquence est la suivante :
verre/SnO₂/SiO₂:Al/Nb₂O₅/SiO₂:Al

Les épaisseurs de couches correspondantes sont indiquées dans le tableau 3 ci-dessous, en nanomètres :

**TABLEAU 3**

| | |
|---|---|
| SnO₂ | 18 |
| SiO₂:Al | 38 |
| Nb2O5 | 102 |
| SiO₂:Al | 87 |

### EXEMPLE 4 COMPARATIF

Le substrat 1 utilisé ne comporte pas de couches minces.

Le substrat 2 est revêtu uniquement sur sa face intérieure 3 du même empilement anti-solaire que celui de l'exemple 2.

Le tableau 4 ci-dessous regroupe, pour les exemples 3 et 4, les valeurs spectrophotométriques, exprimées en pourcentages, mesurées sous incidence nulle, les valeurs de a* et b* étant mesurées en réflexion en face 1.

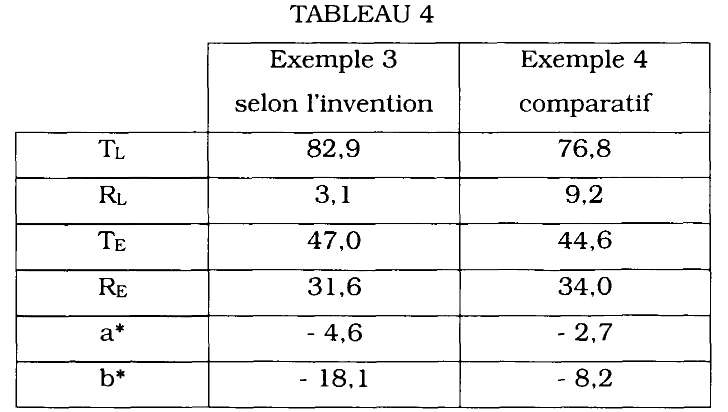

De ce tableau, on voit que la valeur de la transmission lumineuse T_{L} est nettement améliorée à l'aide de la couche selon l'invention. Il est donc possible, pour une valeur de transmission lumineuse donnée, d'augmenter l'épaisseur de la (des) couche(s) d'argent et donc d'améliorer la performance anti-solaire de ce type de vitrage feuilleté.

### EXEMPLE 5 SELON L'INVENTION

Les substrats 1 et 2 ont une composition conforme à l'enseignement du brevet EP-A-0 644 164 et ont, de manière plus précise, les oxydes suivants dans les proportions pondérales ci-après :

| | |
|---|---|
| SiO₂ | 70,8 % |
| Al₂O₃ | 0,6 % |
| CaO | 9,50 % |
| MgO | 4,10 % |
| Na₂O | 13,8 % |
| K₂O | 0,10% |
| Fe₂O₃ | 0,86 % |
| TiO2 | 0,035 % |
| FeO | 0,28 % |
| SO₃ | 0,10% |

Le substrat 1 comporte sur sa face extérieure 1 la couche conforme à l'invention.

Le substrat verrier 2 est revêtu sur sa face extérieure 3 d'un empilement antireflet identique à celui relatif à l'exemple 3.

### EXEMPLE 6 COMPARATIF

Il utilise les mêmes substrats que ceux utilisés dans l'exemple 5 mais dépourvus de tout revêtement.

Le tableau 5 ci-dessous regroupe, pour les exemples 5 et 6, les valeurs spectrophotométriques, mesurées sous incidence nulle, les valeurs de a* et b* étant mesurées en réflexion en face 1.

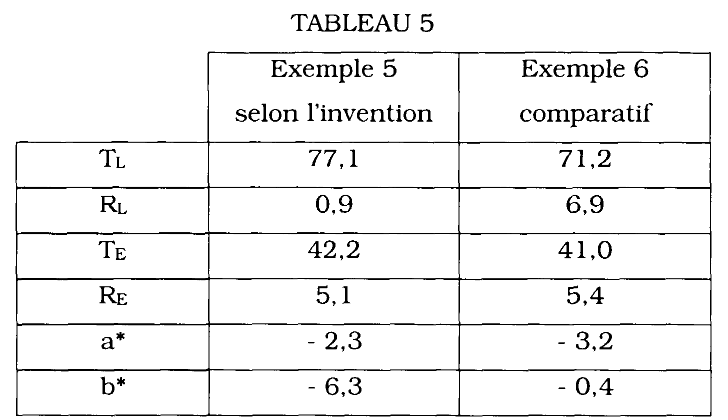

On constate encore, en comparant les résultats des deux exemples, une nette amélioration de la transmission lumineuse T_{L}. On peut donc encore ici envisager, pour une valeur de T_{L} donnée, de teinter davantage un des deux substrats et donc d'améliorer la sélectivité.

## Revendications

1. Substrat transparent, notamment en verre, muni sur au moins une de ses faces d'un revêtement antireflet A, caractérisé en ce que le revêtement antireflet consiste en une seule couche mince constituée à partir d'au moins deux matériaux d'indices de réfraction différents et dont la composition varie de manière continue dans son épaisseur e.

2. Substrat selon la revendication 1, caractérisé en ce que la couche mince a une épaisseur comprise entre 100 et 400 nm.

3. Substrat selon la revendication 1 ou 2, caractérisé en ce que la couche est constituée uniquement à partir de deux matériaux d'indice de réfraction différent.

4. Substrat selon la revendication 3, caractérisé en ce que la couche mince est à base de SiOₓN_{y} avec x et y variant de manière continue dans son épaisseur, respectivement entre 0 et 2 et entre 0 et 1,33.

5. Substrat selon la revendication 4, caractérisé en ce que dans la zone de la couche située à proximité de l'interface avec le milieu ambiant tel que l'air, x varie de manière croissante strictement entre 0 et 2 et y varie de manière décroissante strictement entre 1,33 et 0.

6. Substrat selon la revendication 3, caractérisé en ce que la couche mince est à base de Si_{z}Ti_{1-z}O₂ avec z variant de manière continue dans son épaisseur strictement entre 0 et 1.

7. Substrat selon la revendication 6, caractérisé en ce que dans la zone de la couche située à une proximité l'interface avec le milieu ambiant tel que l'air, z varie de manière décroissante strictement entre 0 et 1.

8. Substrat selon l'une quelconque des revendications précédentes, caractérisé en ce que l'indice de réfraction de la couche mince est compris entre 1,35 et 1,75, avantageusement entre 1,38 et 1,70 dans la zone située à une distance comprise entre 0 et 10 nanomètres de l'interface avec le milieu ambiant tel que l'air.

9. Substrat selon l'une quelconque des revendications 1 à 8, caractérisé en ce qu'il est muni sur la face dépourvue du revêtement antireflet d'un empilement de couches minces comportant au moins une couche fonctionnelle métallique, du type argent.

10. Substrat selon la revendication 9, caractérisé en ce que l'épaisseur de la couche fonctionnelle métallique est comprise entre 20 et 25 nanomètres de manière à lui conférer des propriétés anti-solaires.

11. Substrat selon la revendication 9 ou 10, caractérisé en ce que l'empilement de couches minces a la séquence suivante :
verre/Si₃N₄/ZnO/Ag/Ti/ZnO/Si₃N₄/ZnO/Ag/Ti/ZnO/Si₃N₄

12. Vitrage feuilleté comportant au moins un substrat selon l'une quelconque des revendications 1 à 11.

13. Vitrage selon la revendication 12 comportant deux substrats transparents, notamment en verre, assemblés par un intercalaire thermoplastique comprenant au moins une feuille de polyvinylbutyral (PVB), caractérisé en ce que le substrat transparent dépourvu du revêtement antireflet A comporte, lui aussi, sur au moins une de ses faces, un revêtement antireflet A', de préférence déposé selon une technique de pulvérisation à magnétron.

14. Vitrage selon la revendication 13, caractérisé en ce que le revêtement antireflet A' a la séquence suivante :
verre/SnO₂/SiO₂:Al/Nb₂O₅ ou TiO2/SiO₂:Al

15. Vitrage selon la revendication 13 ou 14, caractérisé en ce que le revêtement antireflet A est en face 1 et en ce que le revêtement antireflet A' est en face 4.

16. Utilisation du vitrage selon l'une des revendications 12 à 15 en tant que pare-brise de véhicule automobile ou verre de protection d'images photographiques ou de peintures.

17. Procédé de fabrication d'un substrat transparent, notamment en verre, muni sur au moins une de ses faces d'un revêtement antireflet A comportant au moins une couche mince d'épaisseur e déposée selon une technique de CVD plasma à radiofréquence ou micro-ondes à partir d'au moins deux précurseurs pendant une durée t, caractérisé en ce que l'on fait varier de manière continue, pendant la durée t, au moins un paramètre de dépôt.

18. Procédé selon la revendication 17, caractérisé en ce que le paramètre de dépôt que l'on fait varier pendant la durée t est le débit d'au moins un des deux précurseurs.

19. Procédé de fabrication du substrat selon l'une des revendications 1 à 11, caractérisé en ce que le revêtement antireflet A est déposé par une technique de pulvérisation cathodique, notamment assistée par un champ magnétique, et de préférence réactive.
